# EUROPÄISCHE PATENTSCHRIFT

(11) **EP 4 028 270 B1**
(45) Veröffentlichungstag und Bekanntmachung des Hinweises auf die Patenterteilung: **03.09.2025**
(21) Anmeldenummer: 20767992.9
(22) Anmeldetag: 01.09.2020
(51) Int. Cl.: B60G 17/015, B60G 17/016, B60G 17/052

(54) **KRAFTFAHRZEUG MIT LIFTACHSE SOWIE VERFAHREN ZUM BETREIBEN DERSELBEN**
MOTOR VEHICLE COMPRISING A LIFT AXLE AND METHOD FOR OPERATING SAME
VÉHICULE À MOTEUR COMPRENANT UN ESSIEU RELEVABLE ET SON PROCÉDÉ DE FONCTIONNEMENT

(30) Priorität: 13.09.2019 DE 102019124649
(43) Veröffentlichungstag der Anmeldung: 20.07.2022
(73) Patentinhaber: ZF CV Systems Global GmbH, 3006 Bern (CH)
(72) Erfinder: SEEGER, Marco, 30855 Langenhagen (DE)
(74) Vertreter: Ohlendorf, Henrike
(86) Internationale Anmeldenummer: PCT/EP2020/074294
(87) Internationale Veröffentlichungsnummer: WO 2021/047944

(56) Entgegenhaltungen:
- EP-A1- 3 381 774
- EP-A2- 1 674 306
- DE-A1- 10 354 289
- DE-A1- 102017 213 199
- DE-T2- 60 314 533
- GB-A- 2 518 053
- JP-A- 2011 125 204
- JP-A- H02 262 412

## Beschreibung

Die Erfindung betrifft ein Kraftfahrzeug zum Transport einer Last und/oder von Personen auf einer Fahrbahn, welches wenigstens eine Lenkachse, mindestens eine Antriebsachse sowie zumindest eine Liftachse mit wenigstens einem Aktuator zum Anheben und Absenken derselben aufweist, wobei die Räder der wenigstens einen Antriebsachse mittels zumindest einer als Elektromotor und als Generator betreibbaren Elektromaschine wenigstens unterstützend elektrisch antreibbar sowie bei einem Rekuperationsbetrieb des Kraftfahrzeugs generatorisch antreibend nutzbar sind, und bei dem die mindestens eine Elektromaschine mit einem elektrischen Akkumulator sowie mit einer Steuerungs- und/oder Regelungsvorrichtung verbunden ist, welche zur Steuerung und/oder Regelung des elektromotorischen und generatorischen Betriebs der wenigstens einen Elektromaschine sowie zur Steuerung und/oder Regelung des Betriebs der zumindest einen Liftachse ausgebildet ist. Darüber betrifft die Erfindung ein Verfahren zum Betrieb eines solchen Kraftfahrzeugs sowie eine Steuerungs- und/oder Regelungsvorrichtung zur Durchführung dieses Verfahrens.

Aus dem Stand der Technik sind Kraftfahrzeuge bekannt, die mittels einer von einem elektrischen Akkumulator gespeisten motorischen Elektromaschine zumindest teilunterstützt antreibbar sind. Während eines Rekuperationsbetriebs, bei welchem das Kraftfahrzeug antriebslos rollt und die Elektromaschine angetrieben durch Fahrzeugräder als Generator betrieben wird, wird das Fahrzeug verzögert und die erzeugte elektrische Energie in den Akkumulator zur Reichweitenverlängerung des Kraftfahrzeugs eingespeist. Der Einsatz einer rein mechanisch wirkenden, reibungsbasierten Bremsanlage ist im Normalbetrieb des Kraftfahrzeugs dadurch oft nicht erforderlich.

Aus der EP 3 381 774 A1 ist ein Kraftfahrzeug mit einer Dauerbremse mit einer zum rekuperativen Bremsen ausgeführten elektrischen Maschine und mit einer Liftachse, die in Antriebsverbindung mit der elektrischen Maschine steht, bekannt. Bei Einstellung einer Fahrzeug-Verzögerungsanforderung an einer Dauerbremsvorrichtung wird die Liftachse abgesenkt, falls diese im angehobenen Zustand ist. Weiterhin offenbart D1, dass die Dauerbremseinrichtung bei Bedarf eine Anti-Blockier-Bremsung durchführen kann, bei der ein auf ein Rad des Fahrzeugs aufzubringendes Dauerbremsen-Bremsmoment zumindest zeitweise auf null oder auf einen vorgebbaren Wert begrenzt wird, um dadurch ein Blockieren des Rads relativ zur Fahrbahn zumindest zeitweise zu verhindern. Die Blockierung oder drohende Blockierung kann mittels Raddrehzahlsensoren erkannt werden. Diese Anti-Blockier-Bremsung hat keinen Zusammenhang zu einem Zustand der Liftachse.

Aus der DE 10 2017 213 199 A1 ist eine Einstellvorrichtung für ein elektrisch betriebenes Nutzfahrzeug sowie ein Verfahren zum Betreiben desselben bekannt. Dieses Kraftfahrzeug hat eine Vorderachse und mindestens zwei Hinterachsen sowie eine pneumatische Niveaueinstellvorrichtung für zumindest eine der beiden Hinterachsen. Außerdem verfügt dieses Kraftfahrzeug über mindestens eine Elektromaschine zum motorischen Antreiben der Räder der Hinterachsen sowie über eine Batterie, welche die Elektromaschine während des motorischen Betriebs mit Strom versorgt. In einem Rekuperationsbetrieb, in dem die Elektromaschine als Generator arbeitet und von den Rädern der Hinterachsen angetrieben wird, um die Batterie aufzuladen, stellt die Niveaueinstellvorrichtung das Niveau des Fahrzeugs gegenüber der Fahrbahn sowie die einstellbare Hinterachse so ein, dass auf beide Hinterachsen im Wesentlichen die gleiche Last einwirkt. Hierdurch soll der Rekuperationsbetrieb verbessert werden. Eine solche Optimierung des Rekuperationsbetriebs ist lediglich bei einer Gefällefahrt des Kraftfahrzeugs vorgesehen. Hierzu ist am Fahrzeug ein Luftfedersystem zur Lastverteilung an den Hinterachsen erforderlich.

Aus der EP 1 674 306 A1 ist ein Fahrzeug, nämlich ein Mähdrescher, mit zwei Fahrzeugachsen und einer zwischen den Fahrzeugachsen angeordneten Stützanordnung bekannt. Die Stützanordnung weist ein von einem Stützrahmen aufgenommenes Stützrad auf. Indem eine Verteilung von auf die Fahrzeugachsen und die Stützradanordnung wirkenden Stützlasten schlupfabhängig geregelt wird, soll es möglich sein, die auf die Räder wirkenden Momente zur Bewegung des Fahrzeugs optimal auf den Boden zu übertragen. Das Stützrad kann nicht vom Boden abgehoben werden.

Die JP 2011 125 204 A1 offenbart ein Verfahren und ein Steuergerät zum regenerativen Bremsen eines Fahrzeugs.

Der Erfindung lag vor diesem Hintergrund die Aufgabe zugrunde, ein Kraftfahrzeug vorzustellen, mit dem ein weiter verbesserter Rekuperationsbetrieb möglich ist. Außerdem sollte ein Verfahren zum Betrieb eines derartigen Kraftfahrzeugs beschrieben werden.

Die Lösung dieser Aufgabe wird durch ein Kraftfahrzeug sowie ein Verfahren mit den Merkmalen der jeweils unabhängigen Ansprüche erreicht. Vorteilhafte Weiterbildungen sind in den zugeordneten abhängigen Ansprüchen definiert.

Demnach betrifft die Erfindung zunächst ein Kraftfahrzeug zum Transport einer Last und/oder von Personen auf einer Fahrbahn, welches wenigstens eine Lenkachse, mindestens eine Antriebsachse sowie zumindest eine Liftachse mit wenigstens einem Aktuator zum Anheben und Absenken derselben und eine als Elektromotor und als Generator betreibbare Elektromaschine aufweist, wobei die Räder der wenigstens einen Antriebsachse mittels zumindest der Elektromaschine wenigstens unterstützend elektrisch antreibbar sowie bei einem Rekuperationsbetrieb des Kraftfahrzeugs generatorisch antreibend nutzbar sind, und bei dem die mindestens eine Elektromaschine mit einem elektrischen Akkumulator sowie mit einer Steuerungs- und/oder Regelungsvorrichtung verbunden ist, welche zur Steuerung und/oder Regelung des elektromotorischen und generatorischen Betriebs der wenigstens einen Elektromaschine sowie zur Steuerung und/oder Regelung des Betriebs der zumindest einen Liftachse ausgebildet ist.

Zur Lösung der produktbezogenen Aufgabe ist bei diesem Kraftfahrzeug vorgesehen, dass die Steuerungs- und/oder Regelungsvorrichtung mit Sensoren zur Radschlupferkennung an den Räder der wenigstens einen Antriebsachse verbunden ist, und dass die Steuerungs- und/oder Regelungsvorrichtung derart ausgebildet ist, dass diese während eines aktiven Rekuperationsbetriebs dann einen Steuerungsbefehl an den zumindest einen Aktuator der Liftachse zum Anheben derselben und dadurch zum Entlasten derer Räder senden kann, wenn Radschlupf an zumindest einem Rad der wenigstens einen Antriebsachse auftritt.

Es ist an sich bekannt, dass bei einer antriebslosen Vorwärtsfahrt des Kraftfahrzeugs kein aktiver Antrieb der Räder der mindestens einen Antriebsachse durch die zumindest eine Elektromaschine oder einen Verbrennungsmotor erfolgt. Durch ein fahrerseitiges Betätigen eines Bremspedals oder das Aktivwerden eines automatischen Bremssystems, wie zum Beispiel eines Abstandsassistenten, Notbremsassistenten, eines Geschwindigkeitsassistenten, werden der Rekuperationsbetrieb und gegebenenfalls ergänzend dazu ein rein mechanischer, reibungsbasierter Bremsbetrieb bis zum Erreichen einer vorgegebenen Geschwindigkeit oder bis zum vollständigen Stillstand des Kraftfahrzeugs eingeleitet. Im Rekuperationsbetrieb wird die Elektromaschine im generatorischen Betrieb betrieben. Die hierbei erzeugte elektrische Energie wird in den elektrischen Akkumulator des Kraftfahrzeugs eingespeist, während im rein mechanischen Bremsbetrieb die abgebaute kinetische Energie des Kraftfahrzeugs in technisch nicht mehr nutzbare Wärmeenergie umgewandelt wird.

Durch die erfindungsgemäße Ausbildung eines Kraftfahrzeugs lässt sich an diesem eine gute Traktion der Räder der mindestens einen Antriebsachse im Rekuperationsbetrieb auch bei auftretendem Radschlupf sicherstellen, da die Räder der nicht angehobenen wenigstens einen Antriebsachse mit einer größeren Lastkraft beaufschlagt werden. Darüber hinaus wird der Rekuperationsbetrieb hinsichtlich der erzeugbaren elektrischen Energie weiter optimiert, weil die durch die Elektromaschine im generatorischen Betrieb erzeugte mechanische Last über die Fahrzeugräder gut an der Fahrbahn abgestützt werden kann.

Das so ausgebildete Kraftfahrzeug kann vollelektrisch oder mittels einer Kombination aus mindestens einer gattungsgemäßen Elektromaschine und einer Brennkraftmaschine, das heißt durch einen Hybridantrieb, betrieben sein. Außerdem kann ein solches Kraftfahrzeug gegebenenfalls mit einem Luftfedersystem zur Niveauregulierung sowie zur lastabhängigen Anpassung der Federung ausgerüstet sein. In diesem Fall kann jede Luftfeder mit einem Drucksensor ausgerüstet sein. Durch die Auswertung der Druckmesswerte mit Hilfe der Steuerungs- und/oder Regelungsvorrichtung lassen sich dann die auf die Räder der Achsen einwirkenden vertikalen Lasten ermitteln.

Bei dem hier vorgeschlagenen Kraftfahrzeug ist bevorzugt vorgesehen, dass die Steuerungs- und/oder Regelungsvorrichtung derartig ausgebildet ist, dass diese die antriebslose Liftachse mittels Steuerungsbefehle an den zumindest einen zugeordneten Aktuator wenigstens teilweise anheben und dadurch zumindest teilweise entlasten kann, sodass die auf die mindestens eine Antriebsachse wirkende zusätzliche Lastkraft variabel einstellbar ist. Durch ein zumindest teilweises Anheben der Liftachse lässt sich demnach die Lastkraft auf die mindestens eine Antriebsachse stufenlos variieren, wobei die Räder der Liftachse noch vollen, jedoch entlasteten Kontakt mit der Fahrbahn haben können.

Der genannte wenigstens eine Aktuator an der Liftachse ist bei Nutzfahrzeugen bevorzugt pneumatisch betätigbar, weil derartige Kraftfahrzeuge für deren mechanische Bremsanlage üblicherweise eine Drucklufterzeugungsvorrichtung aufweisen. Alternativ dazu können auch elektromotorisch oder hydraulisch betriebene Aktuatoren zum Anheben und Absenken der Liftachse Verwendung finden.

Bei einem als Sattelzug ausgebildeten Nutzfahrzeug mit einer Zugmaschine und einem dreiachsigen Sattelauflieger kann beispielhaft vorgesehen sein, dass durch ein vollständiges Anheben der Liftachse beziehungsweise deren Räder von der Fahrbahn die dann auf die beiden Antriebsachsen wirkende Lastkraft um jeweils 50% erhöht ist. Hierdurch wird Radschlupf und ein damit einhergehender Traktionsverlust der Räder an den beiden elektromotorisch antreibbaren Antriebsachsen vermieden sowie auch dadurch der Rekuperationsbetrieb verbessert. Würde bei auftretendem Radschlupf das beschriebene teilweise oder vollständige Anheben der Liftachse nicht erfolgen, so würde wegen des Radschlupfes die Bremswirkung der im generatorischen Betrieb arbeitenden Elektromaschine nicht an der Fahrbahn abstützen werden können. Zudem würde sich das spursichere Fahrverhalten des Kraftfahrzeuges wegen dem Radschlupf nicht mehr sichergestellt sein.

Weiter ist bevorzugt vorgesehen, dass zum Erfassen des Schlupfes mittels der Steuerungs- und/oder Regelungsvorrichtung zumindest jedem Rad der mindestens einen Antriebsachse ein Drehzahlsensor zugeordnet ist, mittels dem die Steuerungs- und/oder Regelungsvorrichtung signaltechnisch oder datentechnisch verbunden ist. Durch eine mittels der Steuerungs- und/oder Regelungsvorrichtung erfolgende Analyse der von den Drehzahlsensoren ermittelten Drehzahlen der Räder der mindestens einen Antriebsachse ist eine zuverlässige Schlupferkennung beziehungsweise die Detektion eines etwaigen Traktionsverlustes der Antriebsachse im Rekuperationsbetrieb möglich.

Außerdem kann an den Rädern der Liftachse und/oder den Rädern der Lenkachse und der Antriebsachse der Zugmaschine jeweils mindestens ein als Drehzahlsensor ausgeführter Sensor zur weiteren Vervollständigung der Radschlupferkennung mittels der Steuerungs- und/oder Regelungsvorrichtung angeordnet sein.

Weiter kann vorgesehen sein, dass der Steuerungs- und/oder Regelungsvorrichtung mindestens ein Neigungssensor zugeordnet ist, mittels dem die Neigung der Fahrbahn ermittelbar ist, auf welcher das Kraftfahrzeug fährt, und dass die Steuerungs- und/oder Regelungsvorrichtung mit diesem wenigstens einen Neigungssensor signaltechnisch oder datentechnisch verbunden ist. Mittels des Neigungssensors lässt sich erkennen, ob sich das Kraftfahrzeug auf einer im Wesentlichen horizontalen Fahrbahn bewegt. In einer solchen Konstellation ist das Anheben der Liftachse bei einem etwaigem Schlupf an mindestens einer Antriebsachse in dem Rekuperationsbetrieb vorrangig vorgesehen.

Das Kraftfahrzeug ist beispielsweise als ein eingliedriger Lastkraftwagen oder als ein Sattelzug mit einer Zugmaschine und einem Sattelauflieger ausgebildet ist, wobei der eingliedrige Lastkraftwagen oder der Sattelauflieger mittels der mindestens einen Elektromaschine zumindest unterstützend antreibbar ist. Hierdurch ist eine besonders flexible Einsetzbarkkeit des Kraftfahrzeugs gegeben.

Zudem ist bevorzugt vorgesehen, dass die Steuerungs- und/oder Regelungsvorrichtung als ein kompaktes Steuergerät ausgebildet, welches mindestens eine digitale Recheneinheit aufweist. Hierdurch kann die Radschlupferkennung in Echtzeit mittels des jeweils einem Rad der Achsen zugeordneten Drehzahlsensors erfolgen. Außerdem ist eine Neigungsdetektion mittels des mindestens einen Neigungssensors sowie eine Steuerung und/oder Regelung der mindestens zwei Aktuatoren zum Anheben der Liftachse im Rekuperationsbetrieb sowie zum Absenken derselben realisierbar. Im Falle eines zweigliedrigen Kraftfahrzeugs, wie einem Sattelzug mit einer Zugmaschine und einem Sattelauflieger oder einem Lastkraftwagen mit einem Anhänger, sind bevorzugt sowohl die Zugmaschine als auch der Sattelauflieger mit einem Neigungssensor ausgestattet.

Darüber hinaus betrifft die Erfindung ein Verfahren zum Betreiben eines Kraftfahrzeugs zum Transport einer Last und/oder von Personen auf einer Fahrbahn, welches wenigstens eine Lenkachse, mindestens eine Antriebsachse sowie zumindest eine Liftachse mit wenigstens einem Aktuator zum Anheben und Absenken derselben und eine als Elektromotor und als Generator betreibbare Elektromaschine aufweist, wobei die Räder der wenigstens einen Antriebsachse mittels zumindest der Elektromaschine wenigstens unterstützend elektrisch antreibbar sowie bei einem Rekuperationsbetrieb des Kraftfahrzeugs antreibend nutzbar sind, und bei dem die mindestens eine Elektromaschine mit einem elektrischen Akkumulator sowie mit einer Steuerungs- und/oder Regelungsvorrichtung verbunden ist, welche zur Steuerung und/oder Regelung des elektromotorischen und generatorischen Betriebs der wenigstens einen Elektromaschine sowie zur Steuerung und/oder Regelung des Betriebs der zumindest einen Liftachse ausgebildet ist. Das Verfahren weist dazu folgende Verfahrensschritte auf:
a) Überprüfen, ob sich das Kraftfahrzeug durch einen generatorischen Betrieb der Elektromaschine in einem Rekuperationsbetrieb mit Erzeugung und Transfer von elektrischer Energie in den elektrischen Akkumulator befindet,
b) Erkennen, dass an wenigstens einer Antriebsachse ein Radschlupf auftritt, und
c) bei Vorliegen der in den Verfahrensschritten a) und b) jeweils vorgegebenen Bedingung Anheben der antriebslosen Liftachse.

Hierdurch wird im Rekuperationsbetrieb die mindestens Antriebsachse und damit deren Räder einer deutlich erhöhten vertikalen Lastkraft ausgesetzt. Im Ergebnis wird wegen einer sich dann einstellenden verbesserten Traktion der die Elektromaschine antreibenden Räder mehr elektrische Energie erzeugt und in den Akkumulator eingespeist.

Weiter kann verfahrensgemäß vorgesehen sein, dass die auf die mindestens eine Antriebsachse wirkende Lastkraft durch wenigstens teilweises Anheben oder Absenken der zumindest einen Liftachse in Grenzen variabel eingestellt wird. Hierbei kann es sinnvoll sein, dass die zumindest eine Liftachse nur soweit angehoben wird, dass deren Räder weitgehend entlastet sind, jedoch noch Kontakt mit der Fahrbahn haben. Auf diese Weise wird einerseits eine gewünschte Lasterhöhung bei den Rädern der beiden antreibenden Antriebsachsen erzeugt, zudem kann das Rückstellen der Liftachse in deren vollständig abgesenkte Betriebsposition sehr schnell erfolgen.

Bevorzugt ist vorgesehen, dass der Radschlupf mit Hilfe von der Steuerungs- und/oder Regelungsvorrichtung zugeordneten Drehzahlsensoren gemessen wird, die jedem Rad der mindestens einen Antriebsachse zugeordnet sind. Hierdurch ist eine zuverlässige Erkennung von Radschlupf an den Rädern der mindestens einen Antriebsachse möglich.

Darüber hinaus kann an den Rädern der Liftachse und/oder an den Rädern der Lenkachse sowie der Antriebsachse der Zugmaschine jeweils ein Drehzahlsensor zur weiteren Vervollständigung der Radschlupferkennung mittels der Steuerungs- und/oder Regelungsvorrichtung angeordnet sein. Deren Drehzahlmesswerte werden verfahrensgemäß genutzt. Besonders vorteilhaft können Daten eines bereits am Kraftfahrzeug vorhandenen ABS-Bremssystems zur Erreichung des geschilderten Zwecks durch die Steuerungs- und/oder Regelungsvorrichtung mit genutzt werden.

Schließlich kann vorgesehen sein, dass mittels mindestens eines der Steuerungs- und/oder Regelungsvorrichtung zugeordneten Neigungssensors eine für einen Rekuperationsbetrieb mit angehobener Liftachse nutzbare oder nicht nutzbare Fahrbahnneigung erkannt wird. Dabei sieht die Erfindung vor, dass die Liftachse nur dann angehoben wird, wenn die Fahrbahnneigung einen vorgegebenen Wert nicht überschreitet. Dieser nicht zu überschreitende Fahrbahnneigungswert kann beispielsweise 8% Fahrbahnneigung betragen. Insbesondere bei einer steilen Gefällefahrt wird dadurch sichergestellt, dass auch die an den gegebenenfalls schlupfenden Rädern der Liftachse zur Verfügung stehende geringe Traktion zur möglichst sicheren Abbremsung des Kraftfahrzeugs genutzt werden kann.

Zum besseren Verständnis der Erfindung ist der Beschreibung eine Zeichnung beigefügt. In dieser zeigt
Fig. 1 eine schematische Darstellung der auf ein bekanntes Kraftfahrzeug einwirkenden Kräfte bei einem einmaligen Verzögerungsvorgang zur Geschwindigkeitsanpassung von 85 km/h auf 70 km/h mit einer konstanten negativen Beschleunigung von 1,0 m/s², und
Fig. 2 eine schematische Darstellung der auf ein erfindungsgemäßes Kraftfahrzeug bei einer angehobenen Liftachse einwirkenden Kräfte im Zuge des gleichen Verzögerungsvorgangs in einem Rekuperationsbetrieb.

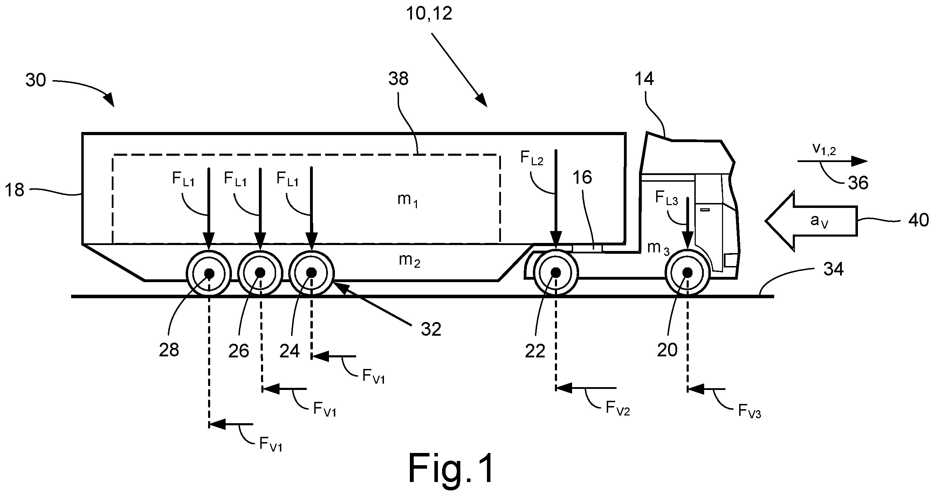

Die Fig. 1 zeigt demnach eine schematische Darstellung der auf ein bekanntes Kraftfahrzeug einwirkenden Kräfte bei einem einmaligen Verzögerungsvorgang zur Geschwindigkeitsanpassung von 85 km/h auf 70 km/h mit einer konstanten negativen Beschleunigung von 1,0 m/s².

Das Kraftfahrzeug 10 ist hier lediglich exemplarisch als ein Sattelzug 12 mit einer Zugmaschine 14 mit einem Koppelpunkt 16 ausgebildet, an dem ein Sattelauflieger 18 angelenkt ist. Die Zugmaschine 14 verfügt über eine Lenkachse 20 und eine dieser in Bezug zur Vorwärtsfahrtrichtung des Sattelaufliegers 18 nachlaufend angeordneten Antriebsachse 22, die beispielsweise durch eine Brennkraftmaschine der Zugmaschine 14 angetrieben sein kann. Der Sattelauflieger 18 weist hier lediglich beispielhaft drei Hinterachsen 24, 26, 28 auf, die in einem von der Zugmaschine 14 wegweisenden hinteren Endbereich 30 des Sattelaufliegers 18 zu einer Hinterachsgruppe 32 zusammengefasst sind. Mindestens eine der drei Hinterachsen 24, 26, 28 kann zumindest teilweise elektromotorisch unterstützt antreibbar sein.

Das Kraftfahrzeug 10 beziehungsweise der zweigliedrige Sattelzug 12 bewegt sich auf der hier im Wesentlichen horizontalen Fahrbahn 34 mit einer Anfangsgeschwindigkeit v₁, wie dies mit dem Richtungspfeil 36 angedeutet ist. Mindestens eine der drei Hinterachsen 24, 26, 28 des Sattelaufliegers 18 kann als eine Liftachse oder Hubachse zum zeitweisen und zumindest teilweisen Abheben von der Fahrbahn 34 zur Verringerung des Rollwiderstands und der Reifenabnutzung des Sattelaufliegers 18 ausgebildet sein.

Der Sattelauflieger 18 ist mit einer zeichnerisch lediglich symbolisch angedeuteten Last 38 beladen, die eine Masse m₁ aufweist. Der Sattelauflieger 18 weist zudem eine Eigenmasse m₂ auf, während die Zugmaschine 14 eine Eigenmasse m₃ hat. Die Masse m₁ der Last 38 beträgt im hier gezeigten Ausführungsbeispiel 20.000 kg, die Masse m₂ des Sattelaufliegers 18 beträgt unbeladen 7.000 kg, und die Masse m₃ der Zugmaschine 14 beträgt 8.000 kg.

Aufgrund der Masse m₁ der Last 38 und der Masse m₂ des Sattelaufliegers 18 wirkt jeweils eine vertikale Lastkraft F_{L1} von etwa 70 kN auf jeweils eine der drei Hinterachsen 24, 26, 28 des Sattelaufliegers 18 ein. Auf die Antriebsachse 22 der Zugmaschine 14 wirkt aufgrund der Massen m₂, m₃ eine senkrechte Lastkraft F_{L2} von etwa 80 kN, und die Lenkachse 20 der Zugmaschine 14 muss noch eine verbleibende vertikale Lastkraft F_{L3} von ca. 60 kN abstützen.

Bei einem einmaligen Verzögerungsvorgangs 40 (einem sogenannten Single Adaptive Braking Event) wirkt eine negative Beschleunigung aᵥ von ca. 1,0 m/s² auf das Kraftfahrzeug 10 ein, wodurch eine Anfangsgeschwindigkeit v₁ des Kraftfahrzeugs 10 von etwa 85 km/h bis auf eine Endgeschwindigkeit v₂ von ungefähr 70 km/h reduziert wird. Im Zuge des einmaligen Verzögerungsvorgangs 40 wird jede der drei Hinterachsen 24, 26, 28 des Sattelaufliegers 18 mit einer Verzögerungskraft Fᵥ₁ in der Größenordnung von 7 kN beaufschlagt. Die Verzögerungskraft F_{V2} an der Antriebsachse 22 der Zugmaschine 14 beträgt bei diesem einmaligen Verzögerungsvorgang 40 etwa 8 kN und die Lenkachse 20 muss bei diesem bekannten Kraftfahrzeug 10 noch eine Verzögerungskraft F_{V3} von 6 kN aufbringen.

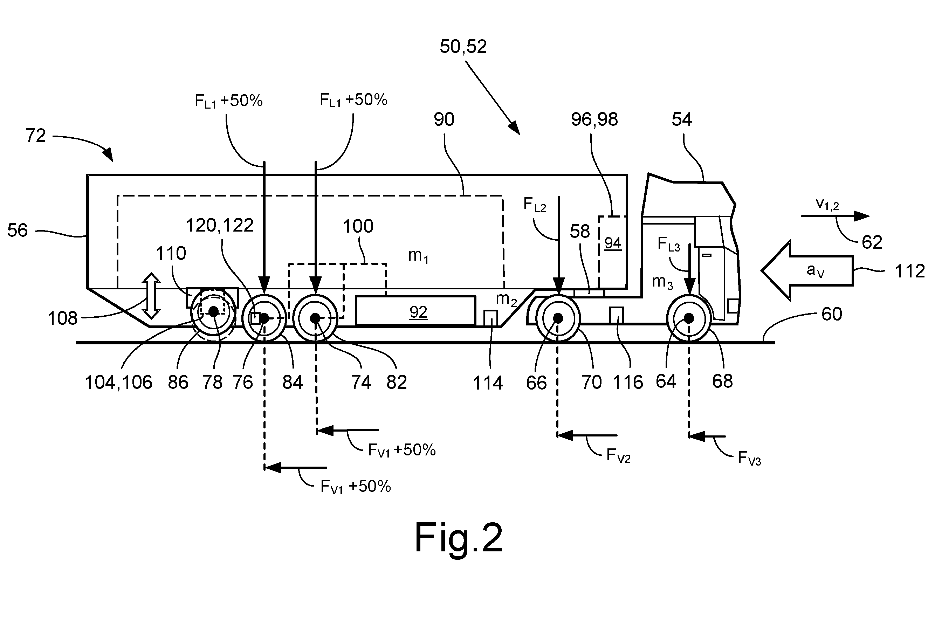

Die Fig. 2 zeigt im Vergleich dazu eine schematische Darstellung der auf ein erfindungsgemäßes Kraftfahrzeug bei einer angehobenen Liftachse einwirkenden Kräfte im Verlauf eines Verzögerungsvorgangs während eines Rekuperationsbetriebs.

Das dort dargestellte Kraftfahrzeug 50 ist ebenfalls als ein zweigliedriger Sattelzug 52 mit einer Zugmaschine 54 und einem Sattelauflieger 56 ausgebildet. Die Zugmaschine 54 verfügt über einen Koppelpunkt 58 zur gelenkigen Anbindung des Sattelaufliegers 56. Alternativ dazu kann das Kraftfahrzeug 50 auch als ein eingliedriger Lastkraftwagen (Kastenwagen) oder als ein zweigliedriger Lastkraftwagen, bestehend aus einem Lastkraftwagen mit einem Anhänger, ausgebildet sein. Das Kraftfahrzeug 50 bewegt sich mit der Geschwindigkeit v₁ über die im Wesentlichen waagerechte Fahrbahn 60, wie dies mit dem Pfeil 62 angedeutet ist.

Die Zugmaschine 54 verfügt hier ebenfalls über eine Lenkachse 64 sowie eine dieser nachlaufende und antreibbare Hinterachse 66 beziehungsweise Antriebsachse, welche zum Beispiel von einer nicht dargestellten Brennkraftmaschine der Zugmaschine 54 angetrieben sein kann. Alternativ dazu kann die Zugmaschine 54 über einen Hybridantrieb mit einer teilweise elektromotorisch unterstützten Brennkraftmaschine oder über einen vollelektrischen Antrieb verfügen. Außerdem ist ein Brennstoffzellenantrieb der Zugmaschine 54 möglich.

Im Fall eines nicht dargestellten eingliedrigen Kraftfahrzeugs weist dieses ein Fahrgestell mit einer Lenkachse und mindestens eine nachgeordneten Antriebsachse beziehungsweise Hinterachse auf. Die Antriebsachse ist mittels mindestens einer elektromotorisch und generatorisch betreibbaren Elektromaschine zumindest unterstützend antreibbar. Zudem ist eine dieser Antriebsachse nachgeordnete Liftachse vorhanden.

Aber nun zurück zum Kraftfahrzeug 50 gemäß Fig. 2: Die Lenkachse 64 der Zugmaschine 54 weist hier zwei Räder auf, von denen lediglich nur ein Rad 68 sichtbar und bezeichnet ist. Dasselbe gilt für die Räder der Hinterachse 66 der Zugmaschine 54, von denen gleichfalls nur ein Rad 70 sichtbar und bezeichnet ist. Die hinter der Zeichenebene liegenden Räder der Lenkachse 64 und der Hinterachse 66 der Zugmaschine 54 sind in der Fig. 2 nicht dargestellt. Die Räder 70 der Hinterachse 66 der Zugmaschine 54 können im Fall höherer, durch den Sattelauflieger 56 bedingter Lasten mit einer Zwillingsbereifung ausgestattet sein.

Der Sattelauflieger 56 verfügt im Bereich seines Hecks 72 über zwei Antriebsachsen 74, 76, welche mittels wenigstens einer nicht dargestellten Elektromaschine zumindest unterstützend antreibbar sind. Außerdem weist der Sattelauflieger 56 eine antriebslose und den beiden Antriebsachsen 74, 76 nachlaufende Liftachse 78 oder Hubachse auf. Der Sattelauflieger 56 ist hier also ein so genannter "e-Trailer" ausgebildet.

Die beiden Antriebsachsen 74, 76 sowie die Liftachse 78 sind hier lediglich beispielhaft zu einer Dreifach-Achsgruppe im Bereich des Hecks 72 des Sattelaufliegers 56 zusammengefasst und angeordnet. Die Antriebsachsen 74, 76 und die Liftachse 78 verfügen jeweils über zwei Räder, von denen hier lediglich die in der Zeichenebene liegenden Räder 82, 84 der beiden Antriebsachsen 74, 76 sowie das Rad 86 der Liftachse 78 sichtbar sind. Die hinter der Zeichenebene befindlichen Räder der Antriebsachsen 74, 76 sowie der Liftachse 78 sind demnach nicht erkennbar. Die Räder 82, 84 der beiden Antriebsachsen 74, 76 und die Räder 86 der Liftachse 78 können erforderlichenfalls als Einfach- oder Zwillingsbereifung oder Dreifachbereifung ausgebildet sein. Die nachlaufende Hinterachse 66 beziehungsweise Antriebsachse der Zugmaschine 54 kann gleichfalls als eine zumindest teilweise elektromotorisch unterstützte Antriebsachse analog zu den Antriebsachsen 74, 76 des Sattelaufliegers 56 ausgeführt sein.

Der Sattelauflieger 56 ist mit einer dort aufgeladenen Last 90 mit einer Masse m₁ versehen. Der Sattelauflieger 56 weist unbeladen selbst eine Masse m₂ auf, während die Masse der Zugmaschine 54 mit dem Bezugszeichen m₃ angegeben ist. Die Beträge der genannten Masen m₁, m₂, m₃ sind die gleichen wie bei dem Ausführungsbeispiel gemäß Fig. 1.

An dem Sattelauflieger 56 ist ferner ein leistungsstarker elektrischer Akkumulator 92 bodennah angeordnet, welcher zur Versorgung der mindestens einen zum hilfsweisen Antrieb dienenden Elektromaschine mit elektrischer Energie dient. Darüber hinaus weist der Sattelauflieger 56 eine komplexe Steuerungs- und/oder Regelungsvorrichtung 94 auf, die hier als ein kompaktes elektronisches Steuergerät 96 mit mindestens einer digitalen Recheneinheit 98 realisiert ist.

Sämtliche Achsen des Kraftfahrzeugs 50 können mit einem nicht dargestellten Luftfedersystem ausgerüstet sein. Dazu sind den beiden Antriebsachsen 74, 76 und der einen Liftachse 78 des Sattelaufliegers 56 sowie der Lenkachse 64 und der Hinterachse 66 der Zugmaschine 54 jeweils mindestens zwei nicht dargestellte Luftfedern zugeordnet.

Die Liftachse 78 ist in diesem Ausführungsbeispiel mittels zwei dieser zugeordneten und von der Steuerungs- und/oder Regelungsvorrichtung 94 betätigbaren Aktuatoren 104, 106 als Teil einer Hubvorrichtung 110 der Liftachse 78 des Sattelaufliegers 56 zumindest teilweise oder vollständig abhebbar und wieder vollständig oder teilweise auf diese absenkbar. Der Doppelpfeil 108 verdeutlicht solche Hubbewegungen. Selbstverständlich ist es im Rahmen der Erfindung auch möglich, dass zum Anheben und Absenken der Liftachse 78 nur ein einziger Aktuator genutzt wird, welcher vorzugsweise mittig an der Liftachse 78 angeordnet ist und bei Bedarf mit einer Stellkraft auf diese einwirkt.

Der Begriff des teilweisen Abhebens der Liftachse 78 meint im Kontext der vorliegenden Beschreibung, dass die Liftachse 78 dabei nur etwas angehoben und daher nur teilweise entlastet wird. Dadurch bleiben deren Räder 86 zwar in Kontakt mit der Fahrbahn 60, auf diese wirkt aber eine verminderte vertikale Kraft. Im Ergebnis einer solchen Vorgehensweise ist die Belastung der in Kontakt mit der Fahrbahn 60 verbleibenden Räder 82, 84 der Antriebsachsen 74, 76 mittels der Steuerungs- und/oder Regelungsvorrichtung 94 in weiten Grenzen variabel einstellbar.

Die Position der vollständig auf der Fahrbahn 60 aufstehenden Räder 86 der Liftachse 78 ist im Gegensatz zur Skizze der Fig. 1 in der Fig. 2 mit einer gestrichelten Umrissdarstellung eingezeichnet. Die vollständig von der Fahrbahn 60 abgehobenen Räder 86 der Liftachse 78 sind in Fig. 2 im Unterschied dazu mit einer durchgezogenen Linie dargestellt.

Bei vollständig in Bezug zur Fahrbahn 60 abgesenkter Liftachse 78 greifen in der Darstellung gemäß Fig. 2 im Wesentlichen jeweils gleich große mechanische Lastkräfte F_{L1} an den beiden zumindest elektromotorisch unterstützend angetriebenen Antriebsachsen 74, 76 sowie an der Liftachse 78 des Sattelaufliegers 56 an. Entsprechendes gilt für die Lastkraft F_{L2} an der Hinterachse 66 sowie für die Lastkraft F_{L3} an der Lenkachse 64 der Zugmaschine 54 des Sattelzugs 52. Die drei im Wesentlichen statischen Lastkräfte F_{L1}, F_{L2}, F_{L3} werden durch die drei genannten Massen m₁, m₂, m₃ unter Einwirkung der Erdanziehungskraft hervorgerufen. Für den Fall, dass das Kraftfahrzeug 50 mit einem Luftfederungssystem ausgestattet ist, können diese Lastkräfte F_{L1}, F_{L2}, F_{L3} zum Beispiel mit Hilfe von in den Luftfedern des Luftfedersystems jeweils integrierten Drucksensoren gemessen und deren Werte mittels der Steuerungs- und/oder Regelungsvorrichtung 94 erfasst und verarbeitet werden.

Bei einem beispielhaft einmaligen Verzögerungsvorgang 112 mit einer negativen Verzögerung aᵥ von hier zum Beispiel 1.0 m/s² greifen bei vollständig auf die Fahrbahn 60 abgesenkter Liftachse 78 analog zur Darstellung der Fig. 1 im Wesentlichen wiederum die Verzögerungskräfte F_{V1} an den Antriebsachsen 74, 76 und der Liftachse 78 des Sattelaufliegers 56 an. Außerdem wirken die beiden Verzögerungskräfte F_{V2}, F_{V3} auf die Hinterachse 66 beziehungsweise auf die Lenkachse 64 der Zugmaschine 54 ein. Die auf die in Fig. 2 mit gestrichelter Line dargestellte abgesenkte Liftachse 78 ebenfalls einwirkende Verzögerungskraft F_{V1} ist der besseren Übersicht halber nicht eingezeichnet.

Bei vollständig von der Fahrbahn 60 abgehobener Liftachse 78 des Sattelaufliegers 56 ergibt sich im Vergleich zu dem in Fig. 1 dargestellten Beispiel eines bekannten Kraftfahrzeugs 10 eine davon abweichende Situation. Demnach wirken auf die im Kontakt mit der Fahrbahn 60 verbleibenden Räder 82, 84 der beiden Antriebsachsen 74, 76 jeweils eine um 50% größere Lastkraft F_{L1}+50% ein, weil die beiden Antriebsachsen 74, 76 die von der Liftachse 78 nicht mehr getragene Lastkraft F_{L1} jeweils zur Hälfte übernommen haben. Hierdurch ist die Traktion der im Kontakt mit der Fahrbahn 60 verbleibenden Räder 82, 84 der beiden Antriebsachsen 74, 76 des Sattelaufliegers 56 signifikant erhöht. Bei dem beschriebenen Verzögerungsvorgang 112 mit der negativen Verzögerung aᵥ wirken auf die beiden Antriebsachsen 74, 76 dann jeweils ebenfalls erhöhten Verzögerungskräfte F_{V1}+50%.

Weiter ist bei dem in Fig. 2 gezeigten Ausführungsbeispiel vorgesehen, dass die Zugmaschine 54 und der Sattelauflieger 56 jeweils mindestens einen Neigungssensor 114, 116 aufweisen, welche ebenfalls mit der Steuerungs- und/oder Regelungsvorrichtung 94 verbunden sind. Hierzu können die Neigungssensoren 114, 116 über nicht dargestellte Leitungen beziehungsweise über ein geeignetes Datenbussystem, oder über ein anderes, hier nicht dargestelltes Steuergerät für die Datenübertagung mit der Steuerungs- und/oder Regelungsvorrichtung 94 verbunden sein.

Bevorzugt ist zudem an jedem Rad 68, 70, 82, 84, 86 des Kraftfahrzeugs 50 zur Radschlupferkennung jeweils ein Sensor vorhanden. Die bevorzugt als Drehzahlsensoren ausgeführten Sensoren sind jeweils mit der Steuerungs- und/oder Regelungsvorrichtung 94 auf geeignete Weise durch nicht dargestellte Leitungen oder das genannte Datenbussystem verbunden. Der besseren zeichnerischen Übersicht halber ist hier lediglich ein der zweiten Antriebsachse 76 des Sattelaufliegers 56 zugeordneter Sensor 120, insbesondere ein Drehzahlsensor 122, repräsentativ für alle übrigen Sensoren dargestellt.

In einem normalen Fahrbetrieb des Sattelzuges 52 werden die beiden Antriebsachsen 74, 76 des Sattelaufliegers 56 zumindest unterstützend von der mindestens einen elektromotorisch arbeitenden Elektromaschine angetrieben, die ihrerseits von dem Akkumulator 92 mit der betriebsnotwendigen elektrischen Energie gespeist wird. Die wenigstens eine Elektromaschine ist hier radnabennah angeordnet und über elektrische Leitungen 100 mit dem Akkumulator 92 verbunden. Die Steuerung und Regelung der mindestens einen die beiden Antriebsachsen 74, 76 des Sattelaufliegers 56 unterstützend elektromotorisch antreibenden Elektromaschine kann ebenfalls mittels der Steuerungs-und/oder Regelungsvorrichtung 94 erfolgen.

Bei einem normalen Bremsprozess des Sattelzuges 52 ist der Rekuperationsbetrieb aktiv und die im generatorischen Betrieb der mindestens einen Elektromaschine freiwerdende elektrische Energie kann dabei kontrolliert von der Steuerungs- und/oder Regelungsvorrichtung 94 in den Akkumulator 92 zum Beispiel zur Reichweitenverlängerung des Kraftfahrzeugs 50 eingespeist werden. Für den Fall, dass ein stärkeres Abbremsen oder eine Notfallbremsung des Kraftfahrzeugs 50 erforderlich ist, ist im Rekuperationsbetrieb ein nicht dargestelltes mechanisches und reibungsbasiertes Bremssystem nutzbar.

Die Steuerungs- und/oder Regelungsvorrichtung 94 ist erfindungsgemäß derart ausgebildet, dass bei aktivem Rekuperationsbetrieb der wenigstens einen Elektromaschine und Auftreten von Radschlupf beziehungsweise eines Traktionsverlustes an den Rädern 82, 84 der mindestens einen Antriebsachse 74, 76 des Sattelaufliegers 56 und/oder der abgesenkten Liftachse 78 diese Liftachse 78 mittels der Aktuatoren 104, 106 zumindest teilweise angehoben wird. Infolgedessen erhöht sich die auf die in Kontakt mit der Fahrbahn 60 verbleibenden Räder 82, 84 der beiden Antriebsachsen 74, 76 jeweils einwirkende Lastkraft F_{L1} um bis zu 50%. Hierdurch wird Schlupf beziehungsweise ein Durchrutschen der Räder 82, 84 der beiden Antriebsachsen 74, 76 des Sattelaufliegers 56 im generatorischen Rekuperationsbetrieb der Elektromaschine verhindert, so dass die Bremswirkung des Rekuperationsbetriebs zunimmt und auch mehr elektrische Energie in den Akkumulator 92 eingespeist werden kann.

Die Erkennung von etwaigem Schlupf an den Rädern 82, 84 des Sattelzugs 52 erfolgt hierbei bevorzugt mit Hilfe der den Rädern jeweils zugordneten Drehzahlsensoren 122, deren Messwerte beziehungsweise Daten der Steuerungs- und/oder Regelungsvorrichtung 94 zur Auswertung zuleitbar sind. Alternativ dazu kann die Steuerungs- und/oder Regelungsvorrichtung 94 hierzu gegebenenfalls digitale Daten beziehungsweise analoge Messwerte eines bereits vorhandenen Antiblockiersystems des Kraftfahrzeugs 52 nutzen.

Mit Hilfe der hier beispielhaft zwei, an die Steuerungs- und/oder Regelungsvorrichtung 94 angeschlossenen Neigungssensoren 114, 116 ist zudem ermittelbar, ob sich der Sattelzug 50, wie hier dargestellt, auf einer im Wesentlichen waagerechten oder einer stark abschüssigen Fahrbahn 60 bewegt. Denn das Anheben der Liftachse 78 kann bei einem zu starken Gefälle der Fahrbahn 60 zu einer Beeinträchtigung der Wirkung der im Rekuperationsbetrieb unter Umständen doch notwendigen Nutzung der mechanischen Bremse des Sattelzugs 52 führen. Hierbei ermöglicht die Anordnung des ersten Neigungssensors 116 an der Zugmaschine 54 und des zweiten Neigungssensors 114 an dem Sattelauflieger 56 eine vorausschauende Gefälleerkennung dahingehend, dass der Steuerungsbefehl an die Aktuatoren 110 zum vollständigen Absenken der Liftachse 78 abgegeben wird, bevor der Sattelauflieger 56 mit der schweren Last 90 einen Abschnitt der Fahrbahn 60 mit vordefiniert zu großem Gefälle befährt.

Bei der Nutzung des erfindungsgemäßen Verfahrens wird in einem ersten Verfahrensschritt a) durch die Steuerungs- und/oder Regelungsvorrichtung 94 überprüft, ob die mindestens eine, die Antriebsachsen 74, 76 zumindest unterstützend antreibende Elektromaschine im Rekuperationsbetrieb generatorische betrieben wird, sodass eine Bremsenergierückgewinnung am Sattelauflieger 56 aktiv ist. In einem zweiten Verfahrensschritt b) erfolgt mit Hilfe der Steuerungs- und/oder Regelungsvorrichtung 94 die Detektion, ob zumindest an den Rädern 82, 84 der mindestens einen Antriebsachse 74, 76 des Sattelaufliegers 56 ein Schlupf beziehungsweise ein Traktionsverlust zur Fahrbahn 60 auftritt. In einem abschließenden dritten Verfahrensschritt c) wird bei kumulativem Erfülltsein der Bedingungen aus den beiden vorangegangenen Verfahrensschritten a) und b) die Liftachse 78 des Sattelaufliegers 56 angehoben, sodass die Räder 82, 84 der zumindest einen Antriebsachse 74, 76 mit einer zusätzlichen vertikalen Lastkraft belastet werden.

Infolgedessen kann die auf die beiden Antriebsachsen 74, 76 jeweils entfallende vertikale Lastkraft F_{L1}, in Abhängigkeit davon, wie weit die Liftachse 78 von der Fahrbahn 60 abgehoben wird, jeweils um bis 50% erhöht werden (F_{L1}+50%). Infolgedessen lässt sich ein Schlupf beziehungsweise ein Traktionsverlust der Räder 82, 84 an den beiden Antriebsachsen 74, 76 vermeiden und die Bremswirkung sowie die Gewinnung elektrischer Energie im Rekuperationsbetrieb der mindestens einen Elektromaschine des Sattelaufliegers 56 erhöhen. Die Erfassung eines etwaigen Schlupfes an den Rädern 82, 84 der beiden Antriebsachsen 74, 76, der Liftachse 78 sowie der Lenkachse 64 und der Hinterachse 66 der Zugmaschine 54 erfolgt mit Hilfe der den Rädern jeweils zugeordneten Drehzahlsensoren 122, die an die Steuerungs- und/oder Regelungsvorrichtung 94 angeschlossen sind. Die von den Drehzahlsensoren 122 übermittelten digitalen Daten beziehungsweise analogen Messwerte werden mittels der Steuerungs- und/oder Regelungsvorrichtung 94 in Echtzeit numerisch ausgewertet und in dessen Ergebnis wird der zumindest eine Aktuator 104, 106 der Hubvorrichtung 110 der Liftachse 78 entsprechend angesteuert.

Mittels der hier zwei Neigungssensoren 114, 116 ist mittels der Steuerungs- und/oder Regelungsvorrichtung 94 darüber hinaus eine Gefällefahrt des Sattelzugs 52 erkennbar. Hierdurch kann das Anheben der Liftachse 78 im Fall eines zu großen Gefälles der Fahrbahn 60 vermieden werden oder die bereits angehobene Liftachse 78 kann dann mittels des mindestens einen Aktuatorens 104, 106 der Hubeinrichtung 110 kontrolliert von der Steuerungs- und/oder Regelungsvorrichtung 94 zumindest teilweise wieder auf die Fahrbahn 60 abgesenkt werden.

### Bezugszeichenliste (Teil der Beschreibung)

- 10: Kraftfahrzeug (Stand der Technik)
- 12: Sattelzug
- 14: Zugmaschine
- 16: Koppelpunkt der Zugmaschine 14
- 18: Sattelauflieger des Kraftfahrzeugs 10
- 20: Lenkachse der Zugmaschine 14
- 22: Antriebsachse der Zugmaschine 14
- 24: Erste Hinterachse des Sattelaufliegers 18
- 26: Zweite Hinterachse des Sattelaufliegers 18
- 28: Dritte Hinterachse des Sattelaufliegers 18
- 30: Endbereich des Sattelaufliegers 18
- 32: Hinterachsgruppe des Sattelaufliegers 18
- 34: Fahrbahn für das Kraftfahrzeug 10
- 36: Geschwindigkeit in Vorwärtsfahrtrichtung, Pfeil
- 38: Last auf dem Sattelauflieger 18
- 40: Verzögerungsvorgang des Kraftfahrzeugs 10
- 50: Kraftfahrzeug (gemäß der Erfindung)
- 52: Sattelzug
- 54: Zugmaschine
- 56: Sattelauflieger
- 58: Koppelpunkt an der Zugmaschine 54
- 60: Fahrbahn für das Kraftfahrzeug 50
- 62: Geschwindigkeit in Vorwärtsfahrtrichtung, Pfeil
- 64: Lenkachse der Zugmaschine 54
- 66: Hinterachse der Zugmaschine 54
- 68: Rad der Lenkachse der Zugmaschine 54
- 70: Rad der Hinterachse der Zugmaschine 54
- 72: Heck des Sattelaufliegers 56
- 74: Erste Antriebsachse des Sattelaufliegers 56
- 76: Zweite Antriebsachse des Sattelaufliegers 56
- 78: Liftachse des Sattelaufliegers 56
- 82: Rad der Antriebsachse 74 am Sattelauflieger 56
- 84: Rad der Antriebsachse 76 am Sattelauflieger 56
- 86: Rad der Liftachse 78 am Sattelauflieger 56
- 90: Last auf dem Sattelauflieger 56
- 92: Elektrischer Akkumulator
- 94: Steuerungs- und/oder Regelungsvorrichtung
- 96: Kompaktes Steuergerät
- 98: Digitale Recheneinheit
- 100: Elektrische Leitungen
- 104: Erster Aktuator an der Liftachse 78
- 106: Zweiter Aktuator an der Liftachse 78
- 108: Vertikalbewegung der Liftachse 78, Doppelpfeil
- 110: Hubvorrichtung
- 112: Verzögerungsvorgang des Kraftfahrzeugs 50
- 114: Neigungssensor an dem Sattelauflieger 56
- 116: Neigungssensor an der Zugmaschine 54
- 120: Sensor
- 122: Drehzahlsensor
- a_{V}: Negative Beschleunigung, Verzögerung
- m₁: Masse der Last 38, 90
- m₂: Eigenmasse des Sattelaufliegers 18, 56
- m₃: Eigenmasse der Zugmaschine 14, 54
- F_{L1}: Vertikale Lastkraft auf Achse 24, 26, 28
- F_{L2}: Vertikale Lastkraft auf Achse 22
- F_{L3}: Vertikale Lastkraft auf Achse 20
- F_{L1}+50%: Vertikale Lastkraft auf Achse 74, 76
- F_{V1}: Verzögerungskraft an Achse 24, 26, 28; 74, 76, 78
- F_{V2}: Verzögerungskraft an Achse 22; 66
- F_{V3}: Verzögerungskraft auf Achse 20; 64
- v₁: Anfangsgeschwindigkeit des Kraftfahrzeugs 10; 50
- v₂: Endgeschwindigkeit des Kraftfahrzeugs 10; 50

## Patentansprüche

1. Kraftfahrzeug (50) zum Transport einer Last (90) und/oder von Personen auf einer Fahrbahn (60), welches wenigstens eine Lenkachse (64), mindestens eine Antriebsachse (74, 76) sowie zumindest eine Liftachse (78) mit wenigstens einem Aktuator (104, 106) zum Anheben und Absenken derselben und eine als Elektromotor und als Generator betreibbare Elektromaschine aufweist, wobei die Räder (82, 84) der wenigstens einen Antriebsachse (74, 76) mittels zumindest der Elektromaschine wenigstens unterstützend elektrisch antreibbar sowie bei einem Rekuperationsbetrieb des Kraftfahrzeugs (50) generatorisch antreibend nutzbar sind, und bei dem die mindestens eine Elektromaschine mit einem elektrischen Akkumulator (92) sowie mit einer Steuerungs- und/oder Regelungsvorrichtung (94) verbunden ist, welche zur Steuerung und/oder Regelung des elektromotorischen und generatorischen Betriebs der wenigstens einen Elektromaschine sowie zur Steuerung und/oder Regelung des Betriebs der zumindest einen Liftachse (78) ausgebildet ist, wobei die Steuerungs- und/oder Regelungsvorrichtung (94) mit Sensoren (120) zur Radschlupferkennung an den Räder (82, 84) der wenigstens einen Antriebsachse (74, 76) verbunden ist, **dadurch gekennzeichnet, dass** die Steuerungs- und/oder Regelungsvorrichtung (94) derart ausgebildet ist, dass diese während eines aktiven Rekuperationsbetriebs dann einen Steuerungsbefehl an den zumindest einen Aktuator (104, 106) der Liftachse (78) zum Anheben derselben und dadurch zum Entlasten derer Räder (86) sendet, wenn Radschlupf an zumindest einem Rad (82, 84) der wenigstens einen Antriebsachse (74, 76) auftritt.

2. Kraftfahrzeug nach Anspruch 1, **dadurch gekennzeichnet, dass** die Steuerungs- und/oder Regelungsvorrichtung (94) derartig ausgebildet ist, dass diese die antriebslose Liftachse (78) mittels Steuerungsbefehle an den zumindest einen zugeordneten Aktuator (104, 106) wenigstens teilweise anheben und dadurch wenigstens teilweise entlasten kann, sodass die auf die mindestens eine Antriebsachse (74, 76) wirkende zusätzliche Lastkraft (F_{L1}) variabel einstellbar ist.

3. Kraftfahrzeug nach Anspruch 1 oder 2, **dadurch gekennzeichnet, dass** zum Erfassen des Schlupfes mittels der Steuerungs- und/oder Regelungsvorrichtung (94) zumindest jedem Rad (82, 84) der mindestens einen Antriebsachse (74, 76) ein als ein Drehzahlsensor (122) ausgebildeter Sensor (120) zugeordnet ist, mittels dem die Steuerungs- und/oder Regelungsvorrichtung (94) signaltechnisch oder datentechnisch verbunden ist.

4. Kraftfahrzeug nach Anspruch 3, **dadurch gekennzeichnet, dass** die Steuerungs- und/oder Regelungsvorrichtung (94) mit mindestens einem Neigungssensor (114, 116) signaltechnisch oder datentechnisch verbunden ist, mittels dem die Neigung derjenigen Fahrbahn (60) ermittelbar ist, auf welcher das Kraftfahrzeug (50) fährt.

5. Kraftfahrzeug nach Anspruch 3 oder 4, **dadurch gekennzeichnet, dass** dieses als ein eingliedriger Lastkraftwagen oder als ein Sattelzug (52) mit einer Zugmaschine (54) und mit einem Sattelauflieger (56) ausgebildet ist, wobei der eingliedrige Lastkraftwagen oder der Sattelauflieger (56) mittels der mindestens einen Elektromaschine zumindest unterstützend antreibbar ist.

6. Verfahren zum Betreiben eines Kraftfahrzeugs (50) zum Transport einer Last (90) und/oder von Personen auf einer Fahrbahn (60), welches wenigstens eine Lenkachse (64), mindestens eine Antriebsachse (74, 76) sowie zumindest eine Liftachse (78) mit wenigstens einem Aktuator (104, 106) zum Anheben und Absenken derselben und eine als Elektromotor und als Generator betreibbare Elektromaschine aufweist, wobei die Räder (84, 86) der wenigstens einen Antriebsachse (74, 76) mittels zumindest der Elektromaschine wenigstens unterstützend elektrisch antreibbar sowie bei einem Rekuperationsbetrieb des Kraftfahrzeugs (50) antreibend nutzbar sind, wobei die mindestens eine Elektromaschine mit einem elektrischen Akkumulator (92) sowie mit einer Steuerungs- und/oder Regelungsvorrichtung (94) verbunden ist, welche zur Steuerung und/oder Regelung des elektromotorischen und generatorischen Betriebs der wenigstens einen Elektromaschine sowie zur Steuerung und/oder Regelung des Betriebs der zumindest einen Liftachse (78) ausgebildet ist, umfassend die folgenden Verfahrensschritte:
a) Überprüfen, ob sich das Kraftfahrzeug durch einen generatorischen Betrieb der Elektromaschine in einem Rekuperationsbetrieb mit Erzeugung und Transfer von elektrischer Energie in den elektrischen Akkumulator (92) befindet,
b) Erkennen, dass an wenigstens einer Antriebsachse (74, 76) ein Radschlupf auftritt, wobei das Verfahren durch den folgenden Schritt gekennzeichnet ist:
c) bei Vorliegen der in den Verfahrensschritten a) und b) jeweils vorgegebenen Bedingung Anheben der antriebslosen Liftachse (78).

7. Verfahren nach Anspruch 6, **dadurch gekennzeichnet, dass** die auf die mindestens eine Antriebsachse (74, 76) wirkende Lastkraft (F_{L1}) durch wenigstens teilweises Anheben oder Absenken der zumindest einen antriebslosen Liftachse (78) in Grenzen variabel eingestellt wird.

8. Verfahren nach Anspruch 7, **dadurch gekennzeichnet, dass** die zumindest eine antriebslose Liftachse (78) nur soweit angehoben wird, dass deren Räder (86) weitgehend entlastet sind, jedoch noch Kontakt mit der Fahrbahn (60) haben.

9. Verfahren nach einem der Ansprüche 7 bis 8, **dadurch gekennzeichnet, dass** der Radschlupf mit Hilfe von der Steuerungs- und/oder Regelungsvorrichtung (94) zugeordneten Drehzahlsensoren (122) gemessen wird, die jedem Rad (82, 84) der mindestens einen Antriebsachse (74, 76) zugeordnet sind.

10. Verfahren nach einem der Ansprüche 6 bis 9, **dadurch gekennzeichnet, dass** mittels mindestens eines der Steuerungs- und/oder Regelungsvorrichtung (94) zugeordneten Neigungssensors (114, 116) eine für einen Rekuperationsbetrieb mit angehobener Liftachse (78) nutzbare oder nicht nutzbare Fahrbahnneigung erkannt wird.

## Claims

1. Motor vehicle (50) for transporting a load (90) and/or persons on a roadway (60), which motor vehicle comprises at least one steering axle (64), at least one drive axle (74, 76) and at least one lift axle (78) having at least one actuator (104, 106) for raising and lowering said lift axle, and an electric machine operable as an electric motor and as a generator, the wheels (82, 84) of the at least one drive axle (74, 76) being electrically drivable at least in a supporting manner by means of at least the electric machine and being usable in a generator-driving manner during recuperation operation of the motor vehicle (50), and the at least one electric machine being connected to an electric accumulator (92) and to an open-loop and/or closed-loop control device (94) which is designed for open-loop and/or closed-loop control of the electromotive and generator operation of the at least one electric machine and for open-loop and/or closed-loop control of the operation of the at least one lift axle (78), the open-loop and/or
closed-loop control device (94) being connected to sensors (120) for wheel slip detection on the wheels (82, 84) of the at least one drive axle (74, 76),
**characterized in that**
the open-loop and/or closed-loop control device (94) is designed such that, during active recuperation operation, it sends a control command to the at least one actuator (104, 106) of the lift axle (78) to raise the same and thereby relieve the load on its wheels (86) when wheel slip occurs on at least one wheel (82, 84) of the at least one drive axle (74, 76).

2. Motor vehicle according to claim 1, **characterized in that** the open-loop and/or closed-loop control device (94) is designed such that it can at least partially raise the driveless lift axle (78) by means of control commands to the at least one associated actuator (104, 106) and thereby at least partially relieve the load, so that the additional load force (F_{L1}) acting on the at least one drive axle (74, 76) can be variably adjusted.

3. Motor vehicle according to claim 1 or 2, **characterized in that** in order to detect the slip by means of the open-loop and/or closed-loop control device (94), at least each wheel (82, 84) of the at least one drive axle (74, 76) is assigned a sensor (120) designed as a speed sensor (122), by means of which the open-loop and/or closed-loop control device (94) is connected in terms of signal or data technology.

4. Motor vehicle according to claim 3, **characterized in that** the open-loop and/or closed-loop control device (94) is connected in terms of signal or data technology to at least one inclination sensor (114, 116), by means of which the inclination of the roadway (60) on which the motor vehicle (50) is traveling can be determined.

5. Motor vehicle according to claim 3 or 4, **characterized in that** said motor vehicle is designed as a single-unit truck or as an articulated truck (52) comprising a tractor unit (54) and comprising a semitrailer (56), the single-unit truck or the semitrailer (56) being drivable at least in a supporting manner by means of the at least one electric machine.

6. Method for operating a motor vehicle (50) for transporting a load (90) and/or persons on a roadway (60), which motor vehicle comprises at least one steering axle (64), at least one drive axle (74, 76), and at least one lift axle (78) having at least one actuator (104, 106) for raising and lowering said lift axle, and an electric machine operable as an electric motor and as a generator, wherein the wheels (84, 86) of the at least one drive axle (74, 76) can be electrically driven at least in a supporting manner by means of at least the electric machine and can be used in a driving manner during recuperation operation of the motor vehicle (50), wherein the at least one electric machine is connected to an electric accumulator (92) and to a open-loop and/or closed-loop control device (94) designed for open-loop and/or closed-loop control of the electromotive and generator operation of the at least one electric machine and for open-loop and/or closed-loop control of the operation of the at least one lift axle (78), comprising the following method steps:
a) checking whether the motor vehicle is in recuperation mode with generation and transfer of electrical energy to the electrical accumulator (92) due to generator operation of the electric machine,
b) detecting that wheel slip occurs on at least one drive axle (74, 76), the method being **characterized by** the following step:
c) if the condition specified in method steps a) and b) is met, raising the driveless lift axle (78).

7. Method according to claim 6, **characterized in that** the load force (F_{L1}) acting on the at least one drive axle (74, 76) is variably adjusted within limits by at least partial raising or lowering of the at least one driveless lift axle (78).

8. Method according to claim 7, **characterized in that** the at least one driveless lift axle (78) is raised only to such an extent that its wheels (86) are largely relieved of load, but still have contact with the roadway (60).

9. Method according to one of claims 7 to 8, **characterized in that** the wheel slip is measured with the aid of speed sensors (122) assigned to the open-loop and/or closed-loop control device (94), which are assigned to each wheel (82, 84) of the at least one drive axle (74, 76).

10. Method according to any of claims 6 to 9, **characterized in that** by means of at least one inclination sensor (114, 116) assigned to the open-loop and/or closed-loop control device (94), a road gradient that can be used or not for recuperation operation with a raised lift axle (78) is detected.

## Revendications

1. Véhicule automobile (50) pour le transport d'une charge (90) et/ou de personnes sur une chaussée (60), lequel véhicule présente au moins un essieu directeur (64), au moins un essieu moteur (74, 76) ainsi qu'au moins un essieu relevable (78) comportant au moins un actionneur (104, 106) pour le levage et l'abaissement de celui-ci et une machine électrique pouvant fonctionner en tant que moteur électrique et en tant que générateur, dans lequel les roues (82, 84) de l'au moins un essieu moteur (74, 76) peuvent être entraînées au moins de manière électriquement assistée au moyen d'au moins la machine électrique et peuvent être utilisées en entraînement générateur lors d'un fonctionnement de récupération du véhicule automobile (50), et dans lequel l'au moins une machine électrique est connectée à un accumulateur électrique (92) ainsi qu'à un dispositif de commande et/ou de régulation (94) qui est configuré pour commander et/ou réguler le fonctionnement électromoteur et générateur de l'au moins une machine électrique ainsi que pour commander et/ou réguler le fonctionnement de l'au moins un essieu relevable (78), dans lequel le dispositif de commande et/ou
de régulation (94) est connecté à des capteurs (120) pour la détection de patinage de roue sur les roues (82, 84) de l'au moins un essieu moteur (74, 76),
**caractérisé en ce que**
le dispositif de commande et/ou de régulation (94) est configuré de telle sorte que, pendant un fonctionnement de récupération actif, celui-ci envoie un ordre de commande à l'au moins un actionneur (104, 106) de l'essieu relevable (78) pour le levage de celui-ci et décharge ainsi ses roues (86), lorsque le patinage de roue se produit sur au moins une roue (82, 84) de l'au moins un essieu moteur (74, 76).

2. Véhicule automobile selon la revendication 1, **caractérisé en ce que** le dispositif de commande et/ou de régulation (94) est configuré de telle sorte que celui-ci peut lever au moins partiellement l'essieu relevable (78) non entraîné au moyen d'ordres de commande à l'au moins un actionneur (104, 106) associé et ainsi le décharger au moins partiellement, de sorte que la force de charge (F_{L1}) supplémentaire agissant sur l'au moins un essieu moteur (74, 76) est réglable de manière variable.

3. Véhicule automobile selon la revendication 1 ou 2, **caractérisé en ce que,** pour la détection du patinage au moyen du dispositif de commande et/ou de régulation (94), un capteur (120) réalisé sous forme de capteur de vitesse de rotation (122) est associé à au moins chaque roue (82, 84) de l'au moins un essieu moteur (74, 76), capteur au moyen duquel le dispositif de commande et/ou de régulation (94) est connecté par une technique de transmission de signaux ou de données.

4. Véhicule automobile selon la revendication 3, **caractérisé en ce que** le dispositif de commande et/ou de régulation (94) est connecté par une technique de transmission de signaux ou de données à au moins un capteur d'inclinaison (114, 116), au moyen duquel l'inclinaison de la chaussée (60) sur laquelle se déplace le véhicule automobile (50) peut être déterminée.

5. Véhicule automobile selon la revendication 3 ou 4, **caractérisé en ce que** celui-ci est conçu comme un camion à un seul élément ou comme un semi-remorque (52) comportant un véhicule tracteur (54) et comportant une semi-remorque (56), dans lequel le camion à un seul élément ou la semi-remorque (56) peut être entraîné au moins de manière assistée au moyen de l'au moins une machine électrique.

6. Procédé permettant de faire fonctionner un véhicule automobile (50) pour le transport d'une charge (90) et/ou de personnes sur une chaussée (60), lequel véhicule présente au moins un essieu directeur (64), au moins un essieu moteur (74, 76) ainsi qu'au moins un essieu relevable (78) comportant au moins un actionneur (104, 106) pour le levage et l'abaissement de celui-ci et une machine électrique pouvant fonctionner en tant que moteur électrique et en tant que générateur, dans lequel les roues (84, 86) de l'au moins un essieu moteur (74, 76) peuvent être entraînées au moins de manière électriquement assistée au moyen d'au moins la machine électrique et peuvent être utilisées en entraînement lors d'un fonctionnement de récupération du véhicule automobile (50), dans lequel l'au moins une machine électrique est connectée à un accumulateur électrique (92) ainsi qu'à un dispositif de commande et/ou de régulation (94) qui est configuré pour commander et/ou réguler le fonctionnement électromoteur et générateur de l'au moins une machine électrique ainsi que pour commander et/ou réguler le fonctionnement de l'au moins un essieu relevable (78), comprenant les étapes de procédé suivantes :
a) fait de vérifier, par un fonctionnement générateur de la machine électrique, si le véhicule automobile se trouve dans un fonctionnement de récupération avec production et transfert d'énergie électrique dans l'accumulateur électrique (92),
b) fait de détecter qu'un patinage de roue se produit sur au moins un essieu moteur (74, 76), dans lequel le procédé est **caractérisé par** l'étape suivante :
c) en présence de la condition prédéfinie respective aux étapes de procédé a) et b), levage de l'essieu relevable (78) sans entraînement.

7. Procédé selon la revendication 6, **caractérisé en ce que** la force de charge (F_{L1}) agissant sur l'au moins un essieu moteur (74, 76) est réglée de manière variable dans certaines limites en levant ou en abaissant au moins partiellement l'au moins un essieu relevable (78) sans entraînement.

8. Procédé selon la revendication 7, **caractérisé en ce que** l'au moins un essieu relevable (78) sans entraînement est levé uniquement jusqu'à ce que ses roues (86) soient largement déchargées, mais encore en contact avec la chaussée (60).

9. Procédé selon l'une des revendications 7 à 8, **caractérisé en ce que** le patinage de roue est mesuré à l'aide de capteurs de vitesse de rotation (122) associés au dispositif de commande et/ou de régulation (94) et associés à chaque roue (82, 84) de l'au moins un essieu moteur (74, 76).

10. Procédé selon l'une des revendications 6 à 9, **caractérisé en ce qu'**une inclinaison de chaussée utilisable ou non pour un fonctionnement de récupération avec l'essieu relevable (78) levé est détectée au moyen d'au moins un capteur d'inclinaison (114, 116) associé au dispositif de commande et/ou de régulation (94).
